# EUROPÄISCHE PATENTSCHRIFT

(11) **EP 3 251 817 B1**
(45) Veröffentlichungstag und Bekanntmachung des Hinweises auf die Patenterteilung: **17.06.2020**
(21) Anmeldenummer: 16171973.7
(22) Anmeldetag: 30.05.2016
(51) Int. Cl.: B29C 65/22, B29C 65/74, B29C 65/38

(54) **TRENNSCHWEISSEINRICHTUNG UND VERFAHREN ZUM BEREICHSWEISEN FÜGEN UND BEREICHSWEISEN TRENNEN VON VERSCHWEISSBAREN FOLIENBAHNEN MIT EINER TRENNSCHWEISSEINRICHTUNG**
CUT AND SEAL WELDING DEVICE AND METHOD FOR THE JOINING AND SEPARATING OF AREAS OF WELDABLE FOIL WEBS WITH A CUT AND SEAL WELDING DEVICE
DISPOSITIF DE COUPE ET DE SOUDAGE ET PROCEDE D'ASSEMBLAGE PARTIEL ET SEPARATION PARTIELLE DE BANDES DE FEUILLES SOUDABLES A L'AIDE D'UN DISPOSITIF DE COUPE ET DE SOUDAGE

(43) Veröffentlichungstag der Anmeldung: 06.12.2017
(73) Patentinhaber: ROPEX Industrie-Elektronik GmbH, 74321 Bietigheim-Bissingen (DE)
(72) Erfinder: Hupp, Alexander, 75056 Sulzfeld (DE); Peters, Robert, 74321 Bietigheim-Bissingen (DE)
(74) Vertreter: Patentanwälte Magenbauer & Kollegen Partnerschaft mbB

(56) Entgegenhaltungen:
- EP-A1- 2 926 977
- WO-A2-2014/079457
- JP-A- H07 232 715
- JP-A- 2007 191 197

## Beschreibung

Die Erfindung betrifft eine Trennschweißeinrichtung zum bereichsweisen Fügen und bereichsweisen Trennen von verschweißbaren Folienbahnen, mit einer temperierbaren Arbeitsfläche, die zur Auflage von zu fügenden und zu trennenden Folienbahnen ausgebildet ist und die eine elektrische Heizeinrichtung umfasst, sowie mit einem Gegenhalter zur bereichsweisen Einleitung von Druckkräften auf die zu fügenden und zu trennenden Folienbahnen, der mit der Arbeitsfläche einen variabel einstellbaren Arbeitsspalt begrenzt und der zwei voneinander beabstandet angeordnete Fügestempel und einen zwischen den Fügestempeln angeordneten Trennstempel umfasst, wobei der Trennstempel und/oder wenigstens ein Fügestempel beweglich am Gegenhalter aufgenommen sind, wobei dem Trennstempel und/oder dem Fügestempel jeweils ein Kraftsensor und/oder jeweils ein Bewegungssensor, insbesondere ein Wegsensor, zur Ermittlung eines vom Trennstempel bestimmten Trennverlaufs und/oder eines vom Fügestempel bestimmten Fügeverlaufs zugeordnet sind.

Derartige Trennschweißeinrichtungen werden beispielsweise im Bereich der Verpackungstechnik eingesetzt, um aus einem endlosen Folienschlauch einzelne Folienbeutel herzustellen. Dabei wird der Folienschlauch durch Anpressen des Trennstempels auf die Folienbahnen in Richtung der Arbeitsfläche in Kombination mit einer Erwärmung der Folienbahnen in einzelne Schlauchabschnitte unterteilt. Mit Hilfe der Fügestempel werden jeweils seitlich der erzeugten vom Trennstempel erzeugten Trennstelle die jeweiligen Endbereiche der Folienschläuche abdichtend verschweißt, wobei hier ebenfalls durch eine Kombination von Druckkräften, die von den Fügestempeln in Wechselwirkung mit der Arbeitsfläche hervorgerufen werden und einer Erwärmung der Folienbahnen der Folienschläuche der gewünschte Schweißprozess durchgeführt wird.

Die JP 2007 191197 A offenbart eine Verpackungsvorrichtung, bei der verhindert werden soll, dass ein vorausgehender, defekter Beutel einen nachfolgenden Beutel beeinträchtigt, wenn ein Fehler aufgrund eines Fremdkörpers auftritt. Hierzu umfasst die Verpackungsvorrichtung erste und zweite Annäherungssensoren und erste und zweite Erfassungselemente zum Erfassen einer Lücke zwischen beiden Versiegelungsbacken. Eine Steuereinheit beurteilt das Vorhandensein oder Nichtvorhandensein eines Fehlers auf der Grundlage eines Erfassungssignals von den ersten oder zweiten Annäherungssensoren. Wenn die Steuereinheit des Verpackungsabschnitts einen Fehler ermittelt, stoppt eine Steuereinheit einen Greifvorgang, einen Fügevorgang und eine Bandzuführung, um ein Verschließen des Beutels zu verhindern.

Aus der WO 2014/079457 A2 ist eine Vorrichtung zum Verpacken von Gegenständen bekannt, wobei die Verpackung durch mindestens ein Bahnmaterial gebildet wird, wobei typischerweise eine Vielzahl von einzelnen nebeneinanderliegenden Bahnen von Bahnmaterial und eine Anzahl von mehr oder weniger verpackten Gegenständen auf den Bahnen befördert werden, wobei die Vorrichtung einen ersten Mechanismus aufweist, der während des Verpackens von Artikeln das Bahnmaterial kontinuierlich in seiner Längsrichtung verbindet und wobei die Vorrichtung weitere Mechanismen zum Herstellen einzelner Verbindungen und zum Trennen der Artikel in einer Querrichtung des Bahnmaterials aufweist, wobei sich diese Mechanismen in der gleichen Richtung und mit der gleichen Geschwindigkeit wie das Bahnmaterial und die zu verpackenden Gegenstände bewegen.

Die JP H07-232715 A offenbart eine Schweißschiene, die eine Mehrzahl von Lastdetektoren längs der Breiten- und Längsrichtung umfasst, um Schweißfehler zu erfassen, wobei an der Schweißschiene mehrere Versiegelungsteile jeweils separat und verschiebbar angeordnet sind, denen Lasterdetektoren an drei Positionen entlang einer Breitenrichtung der Schweißschiene zugeordnet sind. Die Lastdetektoren können Fremdmaterial ermitteln, das nur in einen Teil der Schweißschiene eingreift.

Die Aufgabe der Erfindung besteht darin, eine verbesserte Überwachung des Trennschweißvorgangs zu ermöglichen, um eine Vergrößerung eines Prozessfensters hinsichtlich der Taktzeiten für den Trennschweißvorgang und/oder der Anforderungen an Materialien und Maße der Folienbahnen und/oder des Wärmeeintrags auf die Folienbahnen während des Trennschweißvorgangs zu ermöglichen.

Diese Aufgabe wird gemäß einem ersten Erfindungsaspekt für eine Trennschweißeinrichtung der eingangs genannten Art mit den Merkmalen des Anspruchs 1 gelöst. Anhand der Sensorsignale, die von dem Kraftsensor und oder dem Bewegungssensor bereitgestellt werden, kann eine geeignete Steuerungseinrichtung Rückschlüsse auf den Verlauf des Trennvorgangs und oder des Fügevorgangs ziehen. Ausgehend von diesen Informationen kann die Steuerungseinrichtung Einfluss auf die Veränderung des Arbeitsspalts zwischen dem Trennstempel und der Arbeitsfläche bzw. des Arbeitsspalts zwischen dem Fügestempel und der Arbeitsfläche und oder auf eine Zentrierung der Arbeitsfläche durch geeignete Ansteuerung der Heizeinrichtungen nehmen. Beispielsweise kann eine Annäherungsgeschwindigkeit des Trennstempels und/oder zumindest eines Fügestempels an die Arbeitsfläche beeinflusst werden. Ergänzend oder alternativ kann durch entsprechende Ansteuerung der Heizeinrichtungen der Wärmeeintrag auf die Folienbahnen variiert werden, um zu einem vorteilhaften Trenn -und Fügeergebnis zu gelangen. Beispielsweise kann vorgesehen sein, dass die Fügestempel starre am Gegenhalter befestigt sind, während der Trennstempel derart relativbeweglich am Gegenhalter angeordnet ist, dass er bei einer Verkleinerung der jeweiligen Arbeitsspalte als erster in Berührkontakt mit den Folienbahnen gelangt, so dass der Trennvorgang vor dem Fügevorgang eingeleitet wird. In diesem Fall kann anhand der Sensorsignale des Kraftsensors und oder des Bewegungssensors, der dem Trennstempel zugeordnet ist, eine Bewegung des Gegenhalters in Abhängigkeit vom Trennvorgang gesteuert oder geregelt werden, so dass beispielsweise eine zuverlässige Trennung der Folienbahnen in Kombination mit einem optisch ansprechenden Verlauf der Trennnaht erreicht werden kann.

Zweckmäßig ist es, wenn zwischen dem Gegenhalter und dem Trennstempel und zwischen dem Gegenhalter und jedem der Fügestempel eine Antriebseinrichtung für eine lineare Verstellbewegung des Trennstempels und der Fügestempel gegenüber dem Gegenhalter angeordnet sind. Mit Hilfe einer Antriebseinrichtung kann eine gezielte Bewegung des jeweiligen Stempels, also des Trennstempels oder des Fügestempels zur individuellen Annäherung an die Arbeitsfläche bzw. Entfernung von der Arbeitsfläche, erzielt werden. Exemplarisch ist die Antriebseinrichtung als elektrischer Antrieb, insbesondere in Form eines Getriebemotors oder Spindelmotors oder Piezostellers, oder als fluidischer Antrieb, insbesondere in Form eines hydraulischen oder pneumatischen Zylinders ausgebildet.

Erfindungsgemäß ist vorgesehen, dass der Trennstempel und der wenigstens eine Fügestempel linearbeweglich elastisch mit dem Gegenhalter gekoppelt sind. Hierdurch kann, insbesondere für die Fügestempel, eine Kraftbegrenzung für die Folienbahnen vorgesehen werden, die mit Hilfe der Trennschweißeinrichtung gefügt werden sollen. Eine elastische Kopplung kann insbesondere mittels einer Federeinrichtung bewirkt werden, die zwischen dem jeweiligen Trennstempel oder Fügestempel und dem Gegenhalter angeordnet wird. Vorzugsweise sind Eigenschaften dieser Federeinrichtung wie beispielsweise eine Elastizitätskonstante für eine proportional wirkende Wendelfeder, in einer Steuerungseinrichtung hinterlegt, so dass beispielsweise in Kenntnis der vom jeweiligen Stempel eingeleiteten Drucckraft auf die Folienbahnen und/oder von einem durch den jeweiligen Stempel zurückgelegten Weg auf die bereits erfolgte Deformation der Folienbahnen rückgeschlossen werden kann.

Hierzu ist in vorteilhafter Weiterbildung der Erfindung vorgesehen, dass der Antriebseinrichtung eine Steuerungseinrichtung zur Bereitstellung von Antriebsenergie in Abhängigkeit von einem Kraftsignal des jeweiligen Kraftsensors und/oder von einem Bewegungssignal des jeweiligen Bewegungssensors zugeordnet ist. Bei der Steuerungseinrichtung handelt es sich vorzugsweise um einen Motorcontroller, der eine Steuerelektronik mit einem Mikroprozessor sowie einen Leistungsteil zur Bereitstellung von elektrischen Strömen umfasst und der zur Ansteuerung eines elektrischen Antriebs ausgebildet ist. In dem Mikroprozessor oder einem dem Mikroprozessor zugeordneten Speicher kann eine Wertetabelle oder ein Algorithmus abgelegt sein, die dazu eingesetzt werden, eintreffende Kraftsignale bzw. Bewegungssignale in geeigneter Weise umzurechnen, so dass Informationen für eine kraftgesteuerte und/oder weggesteuerte Ansteuerung bzw. Regelung der zugeordneten Antriebseinrichtung ermittelt werden können. Diese Informationen werden von der Steuerelektronik in Schaltsignale für das Leistungsteil umgewandelt und an das Leistungsteil bereitgestellt, um in die gewünschte elektrische Energieversorgung der Antriebseinrichtung vornehmen zu können.

In weiterer Ausgestaltung der Erfindung ist vorgesehen, dass der Kraftsensor mit der Antriebseinrichtung verbunden ist und als Sensor aus der Gruppe: elektrischer Stromsensor, elektrischer Spannungssensor, Dehnungssensor, Fluiddrucksensor, ausgebildet ist. Mit Hilfe eines elektrischen Stromsensors kann ein an die Antriebseinrichtung bereitgestellter Strom gemessen werden, um daraus eine von der Antriebseinrichtung abgegebene Druckkraft zu ermitteln. Stromsensoren können beispielsweise bei Gleichstrommotoren angewendet werden, bei denen eine gut vorhersagbare Beziehung zwischen dem aufgenommenen Strom und der abgegebenen Kraft besteht. Elektrische Spannungssensoren können beispielsweise für eine Kraftmessung bei Piezostellern eingesetzt werden. Ein Dehnungssensor ermöglicht eine Kraftmessung unabhängig vom gewählten Antriebsprinzip der Antriebseinrichtung, beispielsweise ist der Dehnungssensor als Dehnungsmessstreifen mit dehnungsabhängigem elektrischem Widerstand ausgebildet. Exemplarisch wird ein solcher Dehnungssensor an einem Stellglied der Antriebseinrichtung, beispielsweise einer Kolbenstange eines hydraulischen oder pneumatischen Zylinders oder einer Zahnstange eines Getriebemotors angeordnet und ermittelt eine druckabhängige Deformation des jeweiligen Stellglieds. Bei einer Ausführung der Antriebseinrichtung als fluidischer Antrieb kann ergänzend oder alternativ zu einem Dehnungssensor ein Fluiddrucksensor eingesetzt werden, mit dessen Hilfe ein Druckniveau des an die Antriebseinrichtung bereitgestellten druckbeaufschlagten Arbeitsfluids bestimmt werden kann.

Bevorzugt ist der Bewegungssensor als Wegmesssystem zwischen dem Gegenhalter und dem Trennstempel und/oder dem wenigstens einen Fügestempel oder als am Trennstempel und/oder am wenigstens einen Fügestempel angebrachter Beschleunigungssensor ausgebildet. Mit Hilfe eines Bewegungssensors kann ein tatsächlicher Weg ermittelt werden, den der jeweilige Stempel relativ zum Gegenhalter vollzieht. Bei einer Ausgestaltung des Bewegungssensors als Wegmesssystem kann beispielsweise ein optisches, kontaktloses Messsystem oder ein intuitives Tauchspulensystem eingesetzt werden. Alternativ kann vorgesehen sein, eine Bewegung des jeweiligen Stempels gegenüber dem Gegenhalter mit Hilfe eines Beschleunigungssensors zu ermitteln. Dies ist insbesondere dann von Interesse, wenn aus Gründen der Vereinfachung der Trennschweißeinrichtung dem Gegenhalter kein eigener Bewegungssensor zugeordnet ist. Hierbei kann eine Bewegung des Trennstempels oder des Fügestempels, die sich durch Überlagerung einer Bewegung des Gegenhalters und eine Bewegung der den jeweiligen Stempel zugeordneten Antriebseinrichtung ergibt, anhand der hierdurch bewirkten Beschleunigungen ermittelt werden.

Vorteilhaft ist es, wenn die elektrische Heizeinrichtung als Impulsschweißeinrichtung ausgebildet ist. Bei einer Impulsschweißeinrichtung, wie sie von der Anmelderin unter dem Produktnamen "CIRUS" vertrieben wird, ist ein Schichtaufbau aus elektrisch leitenden und elektrisch isolierenden, vorzugsweise zumindest teilweise keramischen Schichten, auf einem metallischen Träger vorgesehen. Bei geeigneter Ansteuerung der elektrisch leitenden Schichten, vorzugsweise in Kombination mit einer aktiven Kühlung, insbesondere mittels eines flüssigen Kühlfluids, kann ein Aufheizvorgang einer derartigen Heizeinrichtung mit einem Temperaturgradienten von mehr als 500 Grad Celsius pro Sekunde, vorzugsweise mehr als 1000 Grad Celsius pro Sekunde, insbesondere bis zu 7000 Grad Celsius pro Sekunde, ermöglicht werden. Bei der nachfolgenden Abkühlung kann ein Temperaturgradient von bis zu 1500 Grad Celsius pro Sekunde ausgehend von der Maximaltemperatur der Heizeinrichtung erreicht werden.

Bei Verwendung einer Impulsschweißeinrichtung in Form eines elektrischen Heizbands, beispielsweise bei dem von der Anmelderin vertriebenen "RESISTRON"-System, wird beim Aufheizvorgang exemplarisch ein Temperaturgradient von 100 bis 200 Grad Celsius pro Sekunde und beim Abkühlvorgang, ausgehend von der Maximaltemperatur der Heizeinrichtung, ein Temperaturgradient von 10 bis 50 Grad Celsius pro Sekunde erreicht.

Die Aufgabe der Erfindung wird gemäß einem zweiten Erfindungsaspekt durch ein Verfahren zum bereichsweisen Fügen und bereichsweisen Trennen von verschweißbaren Folienbahnen mit einer Trennschweißeinrichtung nach einem der Ansprüche 1 bis 8 gelöst. Dabei umfasst das Verfahren die Schritte: Bereitstellen der zu fügenden Folienbahnen in einen variabel einstellbaren Arbeitsspalt zwischen der temperierbaren Arbeitsfläche und den mit dem Trennstempel und den Fügestempeln versehenen Gegenhalter, Annähnern des Trennstempels und/oder wenigstens eines Fügestempels an die Arbeitsfläche zur bereichsweisen Einleitung von Druckkräften auf die zu fügenden und zu trennenden Folienbahnen und Ermitteln wenigstens eines individuellen Kraftverlaufs und/oder eines individuellen Bewegungsverlaufs für den Trennstempel und den wenigstens einen Fügestempel anhand von Kraftsignalen eines jeweils zugeordneten Kraftsensors und/oder anhand von Bewegungssignalen eines jeweils zugeordneten Bewegungssensors.

Bei einer Weiterbildung des Verfahrens ist vorgesehen, dass eine Ansteuerung einer dem Trennstempel zugeordneten Antriebseinrichtung in Abhängigkeit von dem ermittelten individuellen Kraftverlauf und/oder von dem individuellen Bewegungsverlauf für den Trennstempel und/oder eine Ansteuerung einer wenigstens einem Fügestempel zugeordneten Antriebseinrichtung in Abhängigkeit von dem ermittelten individuellen Kraftverlauf und/oder von dem individuellen Bewegungsverlauf für den Fügestempel vorgenommen wird.

Eine vorteilhafte Ausführungsform der Erfindung ist in der Zeichnung dargestellt. Hierbei zeigt:
Figur 1 eine Trennschweißeinrichtung zum bereichsweisen Fügen und bereichsweisen Trennen von verschweißbaren Folienbahnen mit einer temperierbaren Arbeitsfläche, einem beweglich gelagerten Gegenhalter und am Gegenhalter aufgenommenen Fügestempeln sowie einem Trennstempel und einer Steuerungseinrichtung, und
Figur 2 eine schematische Darstellung einer Anordnung zweier miteinander verschweißter Folienbahnen.

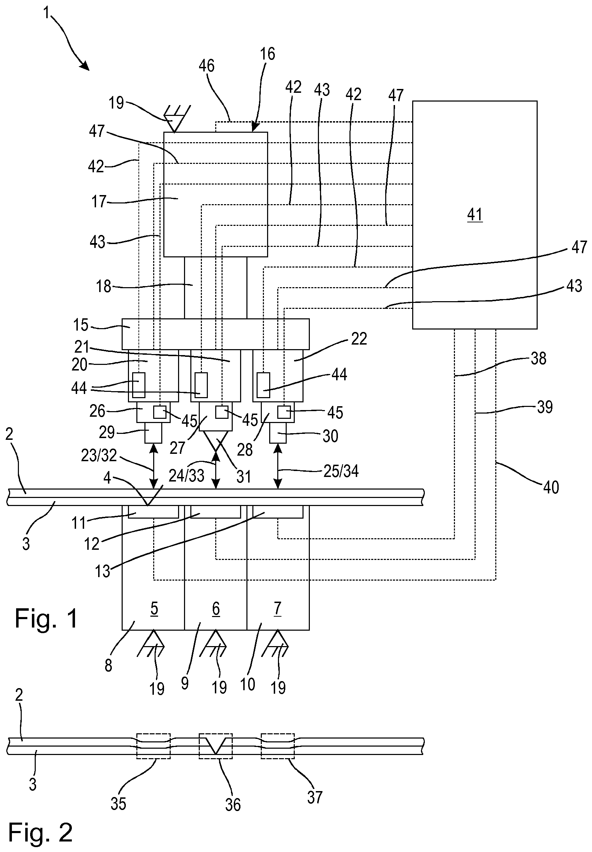

Eine in der Figur 1 schematisch dargestellte Trennschweißeinrichtung 1 ist zum bereichsweisen Fügen und bereichsweisen Trennen von verschweißbaren Folienbahnen 2, 3 ausgebildet. Bei den Folienbahnen handelt es sich vorzugsweise um Kunststofffolien aus gleichen oder unterschiedlichen, jedoch stets thermisch miteinander verschweißbaren Materialien.

Die in der Figur 1 dargestellte Anzahl von zwei miteinander zu verschweißenden Folienbahnen 2, 3 ist lediglich exemplarisch anzusehen, es können auch mehrere Folienbahnen aus gleichartigen oder unterschiedlichen Werkstoffen miteinander verbunden werden, solange diese Folienbahnen zumindest mit der oder den benachbarten Folienbahnen verschweißbar sind.

Eine derartige Trennschweißeinrichtung kann beispielsweise zum lokalen Verschweißen eines Folienschlauchs benutzt werden, um den Folienschlauch in eine Vielzahl von Folienbeuteln zu unterteilen, die jeweils abdichtend ausgebildet sind. Eine Verwendung einer solchen Trennschweißeinrichtung 1 kann beispielsweise für die Verpackung von Schüttgut, insbesondere von Lebensmitteln, in derartige Folienbeutel vorgesehen werden.

Für die Durchführung des gewünschten Trennschweißvorgangs umfasst die Trennschweißeinrichtung 1 eine temperierbare Arbeitsfläche 4, die beispielhaft in drei unterschiedliche Module 5, 6 und 7 unterteilt ist. Jedes der Module umfasst einen Tragkörper 8, 9 und 10 und eine im Tragkörper 8, 9 und 10 aufgenommene und flächenbündig mit der Arbeitsfläche 4 abschließende Heizeinrichtung 11, 12 und 13, bei der es sich beispielsweise um eine obenstehend beschriebene elektrische Impulsschweißeinrichtung handeln kann.

Exemplarisch ist die Arbeitsfläche 4 als Ebene ausgebildet, die sich normal zur Darstellungsebene der Figur 1 erstreckt, und dient zur flächigen Auflage der miteinander zu verschweißenden Folienbahnen 2 und 3. Gegenüberliegend zur Arbeitsfläche 4 ist ein Gegenhalter 15 angeordnet, der exemplarisch plattenförmig ausgebildet ist und der mit einem Linearsteller 16 verbunden ist. Exemplarisch kann der Linearsteller 16 als Pneumatik- oder Hydraulikkolben oder als elektrischer Stellantrieb ausgebildet sein und umfasst ein Gehäuseteil 17 sowie ein relativ beweglich zum Gehäuseteil aufgenommenes Stellglied 18. Dabei ist vorgesehen, dass das Gehäuseteil 17 an einem nicht näher dargestellten Maschinengestell 19 befestigt ist, an dem auch die Module 5, 6 und 7 befestigt sind. Somit ist eine kraftübertragende Verbindung zwischen den Modulen 5, 6 und 7 und dem Gehäuseteil 17 über das Maschinengestell 19 gewährleistet.

Ferner ist exemplarisch vorgesehen, dass an dem Gegenhalter 15 drei, insbesondere identisch ausgebildete, Stelleinheiten 20, 21 und 22 angebracht sind. Diese Stelleinheiten 20, 21 und 22 sind zur Bereitstellung einer linearen Bewegung senkrecht zur Arbeitsfläche 4 vorgesehen, wie dies durch die entsprechenden Bewegungspfeile 23, 24 und 25 angedeutet ist. Beispielhaft können die Stelleinheiten 20, 21 und 22 als Piezosteller ausgebildet sein, die bei Anlegen einer elektrischen Spannung bei kleinem Hub eine große Stellkraft entwickeln. Andere Ausführungsformen für die Stelleinheiten 20, 21, 22, insbesondere in der Art von hydraulischen, elektrischen oder pneumatischen Antrieben sind ebenfalls denkbar.

Stirnseitig an Stellgliedern 26, 27 und 28 der Stelleinheiten 20, 21 und 22 sind unterschiedlich ausgebildete Stempel angeordnet. Hierbei handelt es sich beispielhaft um zwei Fügestempel 29, 30 sowie einen Trennstempel 31. Die Fügestempel 29 und 30 sowie der Trennstempel 31 erstrecken sich jeweils normal zur Darstellungsebene der Figur 1 über die gesamte Breite der zu fügenden Folienbahnen 2, 3 hinaus. Sie können mit Hilfe des Stellglieds 18 und der Stelleinheiten 20, 21, 22 derart an die Arbeitsfläche 4 angenähert werden, dass in dem verbleibenden Arbeitsspalt 32, 33 und 34 jeweils eine Ausübung von Druckkräften auf die zu fügenden Folienbahnen 2, 3 ermöglicht wird. Rein exemplarisch ist bei der Figur 1 die Stelleinheit 21 des Trennstempels 31 weiter ausgefahren als die Stelleinheiten 20, 22 der beiden Fügestempel 29, 30. Dementsprechend ist auch der Arbeitsspalt 33 des Trennstempels 31 kleiner als die Arbeitsspalte 32 und 34 der beiden Fügestempel 29, 30.

Durch die Wechselwirkung der von den Stempeln 29, 30 und 31 aufgebrachten Druckkräfte und der von den Heizeinrichtungen 11, 12 und 13 bereitgestellten Wärmeenergie kann eine lokale Plastifizierung der Folienbahnen 2, 3 bewirkt werden. Die lokale Plastifizierung führt im Falle der Fügestempel 29, 30 zu einem lokalen Verschweißen der Folienbahnen 2, 3, wie dies in der Figur 2 in Form der Schweißzonen 35 und 37 angedeutet ist.

Der Trennstempel 31, der eine keilförmige Querschnittsgeometrie aufweist, ist zur Ausbildung einer Trennfuge zwischen den beiden Folienbahnen 2, 3 ausgebildet und definiert gemäß der Darstellung der Figur 2 eine Trennzone 36 für die Folienbahnen 2, 3. Beispielhaft sind die beiden Fügestempel 29, 30 und der Trennstempel 31 aus einem hitzebeständigen und formstabilen Silikonmaterial hergestellt.

Exemplarisch ist vorgesehen, dass die drei Heizeinrichtungen 11, 12 und 13 über zugeordnete Versorgungsleitungen 38, 39, 40 mit einer Steuerungseinrichtung 41 verbunden sind. Dabei ist die Steuerungseinrichtung 41 dazu vorgesehen, elektrische Energie an die jeweiligen Heizeinrichtungen 11, 12, 13 bereitzustellen, sofern dies für die Durchführung des Trennschweißvorgangs sinnvoll und notwendig ist. Ferner ist die Steuerungseinrichtung 41 über Sensorleitungen 42, 43 mit Sensorelementen 44, 45, die den jeweiligen Stelleinheiten 20, 21, 22 geordnet sind, elektrisch verbunden. Exemplarisch sind die Sensorelemente 44 als Stromsensoren für einen an die Stelleinheiten 20, 21, 22 bereitgestellten elektrischen Stromfluss ausgebildet, um darüber in der Steuerungseinrichtung 41 Rückschlüsse auf das jeweilige Bewegungsverhalten und gegebenenfalls auch auf eine Kraftbereitstellung durch die entsprechenden Stelleinheiten 20, 21, 22 ziehen zu können.

Die Sensorelemente 45 sind jeweils als Dehnmessstreifen (DMS-Streifen), insbesondere als dehnungsabhängige Widerstände, an den beweglichen Stellgliedern 26, 27, 28 der Stelleinheiten 20, 21, 22 angeordnet und ermöglichen eine Kraftmessung für die von den Fügestempeln 29, 30 bzw. dem Trennstempel 31 auf die Folienbahnen 2, 3 übertragenen Druckkräfte. Die Sensorsignale dieser Sensorelemente 45 werden ebenfalls an die Steuerungseinrichtung 41 übertragen, um anhand des Drucckraftverlaufs Rückschlüsse auf den Schweißverlauf ziehen zu können.

Für die Durchführung eines Trennschweißvorgangs kann mit Hilfe der in Figur 1 dargestellten Trennschweißeinrichtung 1 der folgende Ablauf vorgesehen werden:
Zunächst werden die beispielsweise einem Folienschlauch zugehörigen Folienbahnen 2, 3 (die aus Gründen der Übersichtlichkeit nicht geschnitten dargestellt sind) auf die Arbeitsfläche 4 eben aufgelegt, wobei zu diesem Zeitpunkt die Arbeitsspalte 32, 33 und 34 maximal sind und die Heizeinrichtungen 11, 12, 13 deaktiviert sind.

Anschließend erfolgt eine Ansteuerung des Linearstellers 16 über eine Steuerleitung 46, so dass das Stellglied 18 des Linearstellers 16 eine Annäherungsbewegung des Gegenhalters 15 sowie der am Gegenhalter 15 aufgenommenen Stempel 29, 30, 31 an die Arbeitsfläche 4 bewirkt. Dabei kann durch die geeignete Ansteuerung der Stelleinheiten 20, 21, 22 durch die Steuerungseinrichtung 41 frei vorgegeben werden, welcher der Stempel 29, 30, 31 zuerst in Berührkontakt mit den Folienbahnen 2, 3 gelangt. Entsprechend den Vorgaben der Steuerungseinrichtung 41 erfolgt eine Bereitstellung elektrischer Energie an die Stelleinheiten 20, 21, 22 mittels der zugeordneten Versorgungsleitungen 47.

Exemplarisch ist vorgesehen, dass zunächst ein Trennvorgang für die Folienbahnen 2, 3 mit Hilfe des Trennstempels 31 erfolgen soll, dementsprechend wird die dem Trennstempel 31 zugeordnete Stelleinheit 21 aktiviert, um eine zusätzliche Annäherung des Trennstempels 31 an die Arbeitsfläche 4 zu bewirken, wie dies schematisch in der Figur 1 dargestellt ist.

Bei einer Fortführung der Bewegung des Stellglieds 18 des Linearstellers 16 ausgehend von der Darstellung der Figur 1 erfolgt somit zunächst ein Druckaufbau durch den Trennstempel 31 auf die Folienbahnen 2 und 3, während die Fügestempel 29 und 30 erst zu einem späteren Zeitpunkt in Berührkontakt mit den Folienbahnen 2 und 3 gelangen.

Im Anschluß daran erfolgt eine Aktivierung der Heizeinrichtungen 11, 12, 13 durch die Steuerungseinrichtung 41. Hierdurch wird elektrische Leistung über die Versorgungsleitungen 38, 39, 40 an die Heizeinrichtung 11, 12, 13 bereitgestellt, so dass diese lokal eine Erwärmung der Folienbahnen 2, 3 bewirken können. Exemplarisch erstrecken sich die Heizeinrichtungen 11, 12, 13 in normaler Richtung zur Darstellungsebene der Figur 1 über die Breite der Folienbahnen 2, 3 hinaus, so dass eine Erwärmung der Folienbahnen 2, 3 über deren gesamte Breite sichergestellt ist.

Alternativ kann vorgesehen werden, dass zur Durchführung des Trennvorgangs mit Hilfe des Trennstempels 31 zunächst nur die zugehörige Heizeinrichtung 12 aktiviert wird und nach Durchführung des Trennvorgangs die zugehörige Heizeinrichtung 12 deaktiviert wird. Die Heizeinrichtungen 11 und 13, die den Fügestempeln 29 und 30 zugeordnet sind, werden entweder erst nach der Beendigung des Trennvorgangs oder kurz vorher aktiviert und bleiben aktiv, bis der Fügevorgang durch entsprechende Annäherung der Fügestempel 29 und 30 an die Arbeitsfläche 4 durchgeführt ist.

Ferner kann vorgesehen sein, die Bewegungen der Stempel 29, 30, 31 in Abhängigkeit von Sensorsignalen der Sensorelemente 44 und 45 zu regeln, um beispielsweise einen maximalen Druck auf die Folienbahnen 2, 3 zu begrenzen. Dies gilt insbesondere für die Bewegungen der Fügestempel 29 und 30, bei denen vermieden werden soll, dass das Material der Folienbahnen 2, 3 durch zu große Druckeinwirkung seitlich verdrängt wird.

Bei einer nicht zur Erfindung gehörenden Ausführungsform einer Trennschweißeinrichtung sind die Fügestempel fest mit dem Gegenhalter verbunden, während dem Trennstempel eine Stelleinheit zugeordnet ist. Hierdurch kann bei geringerem technischem Aufwand ein ähnliches Arbeitsergebnis wie bei der in Figur 1 beschriebenen Trennschweißeinrichtung 1 erzielt werden. Alternativ kann vorgesehen werden, dass der Trennstempel fest mit dem Gegenhalter verbunden ist, während die Fügestempel durch zwischengeschaltete Stelleinheiten beweglich gegenüber dem Gegenhalter angeordnet sind.

Bei einer nicht dargestellten Ausführungsform einer Trennschweißeinrichtung sind sämtliche Stempel ohne zwischengeschaltete Stelleinheitenmit einer elastischen Federeinrichtung linearbeweglich am Gegenhalter angeordnet. Bei einer derartigen Anordnung kann beispielsweise vorgesehen sein, dass lediglich einem der Fügestempel und/oder dem Trennstempel ein geeignetes Sensorelement, insbesondere zur Ermittlung von Druckkräften zugeordnet ist.

Bei einer weiteren, ebenfalls nicht dargestellten Ausführungsform der Trennschweißeinrichtung ist wenigstens eines der Module, die die Arbeitsfläche bilden und die mit einer Heizeinrichtung ausgebildet sind, linearbeweglich gegenüber den anderen Modulen aufgehängt. Dies kann beispielsweise das Modul sein, das gegenüberliegend zum Trennstempel angeordnet ist. In diesem Fall kann vollständig auf eine bewegliche Anordnung der Stempel zueinander bzw. gegenüber dem Gegenhalter verzichtet werden. Auch bei einer derartigen Anordnung ist es vorteilhaft, wenn wenigstens einen der Stempel ein Sensorelement zur Ermittlung von Druckkräften zugeordnet ist, um der Steuerungseinrichtung Informationen über den Kraftverlauf während der Durchführung der Verschweißung bereitstellen zu können.

## Patentansprüche

1. Trennschweißeinrichtung zum bereichsweisen Fügen und bereichsweisen Trennen von verschweißbaren Folienbahnen (2, 3) mit einer temperierbaren Arbeitsfläche (4), die zur Auflage von zu fügenden und zu trennenden Folienbahnen (2, 3) ausgebildet ist und die eine elektrische Heizeinrichtung (11, 12, 13) umfasst, sowie mit einem Gegenhalter (15) zur bereichsweisen Einleitung von Druckkräften auf die zu fügenden und zu trennenden Folienbahnen (2, 3), der mit der Arbeitsfläche (4) einen variabel einstellbaren Arbeitsspalt (32, 33, 34) begrenzt und der zwei voneinander beabstandet angeordnete Fügestempel (29, 30) und einen zwischen den Fügestempeln (29, 30) angeordneten Trennstempel (31) umfasst, wobei der Trennstempel (31) und wenigstens ein Fügestempel (29, 30) beweglich am Gegenhalter (15) aufgenommen sind, wobei dem Trennstempel (31) und/oder dem Fügestempel (29, 30) jeweils ein Kraftsensor (45) und/oder jeweils ein Bewegungssensor (44), insbesondere ein Wegsensor, zur Ermittlung eines vom Trennstempel (31) bestimmten Trennverlaufs und/oder eines vom Fügestempel (29, 30) bestimmten Fügeverlaufs zugeordnet sind, **dadurch gekennzeichnet, dass** der Trennstempel (31) und der wenigstens eine Fügestempel (29, 30) linearbeweglich elastisch mit dem Gegenhalter (15) gekoppelt sind.

2. Trennschweißeinrichtung nach Anspruch 1, **dadurch gekennzeichnet, dass** der Bewegungssensor (45) als Wegmesssystem zwischen dem Gegenhalter (15) und dem Trennstempel (31) und/oder dem wenigstens einen Fügestempel (29, 30) oder als am Trennstempel (31) und/oder am wenigstens einen Fügestempel (29, 30) angebrachter Beschleunigungssensor ausgebildet ist.

3. Trennschweißeinrichtung nach einem der vorhergehenden Ansprüche, **dadurch gekennzeichnet, dass** dem Trennstempel (31) und jedem der Fügestempel (29, 30) jeweils eine Antriebseinrichtung (20, 21, 22) und jeweils ein Kraftsensor (44) und/oder jeweils ein Bewegungssensor (45) zugeordnet sind.

4. Trennschweißeinrichtung nach Anspruch 3, **dadurch gekennzeichnet, dass** der Antriebseinrichtung (20, 21, 22) eine Steuerungseinrichtung (41) zur Bereitstellung von Antriebsenergie in Abhängigkeit von einem Kraftsignal des jeweiligen Kraftsensors (44) und/oder von einem Bewegungssignal des jeweiligen Bewegungssensors (45) zugeordnet ist.

5. Trennschweißeinrichtung nach Anspruch 3 oder 4, **dadurch gekennzeichnet, dass** der Kraftsensor (44) mit der Antriebseinrichtung (20, 21, 22) verbunden ist und als Sensor aus der Gruppe: elektrischer Stromsensor, elektrischer Spannungssensor, Dehnungssensor, Fluiddrucksensor, ausgebildet ist.

6. Trennschweißeinrichtung nach einem der vorhergehenden Ansprüche, **dadurch gekennzeichnet, dass** die elektrische Heizeinrichtung (11, 12, 13) als Impulsschweißeinrichtung ausgebildet ist.

7. Verfahren zum bereichsweisen Fügen und bereichsweisen Trennen von verschweißbaren Folienbahnen (2, 3) mit einer Trennschweißeinrichtung (1) nach einem der vorhergehenden Ansprüche, mit den Schritten: Bereitstellen der zu fügenden Folienbahnen (2, 3) in einen variabel einstellbaren Arbeitsspalt (32, 33, 34) zwischen der temperierbaren Arbeitsfläche (4) und den mit dem Trennstempel (31) und den Fügestempeln (29, 30) versehenen Gegenhalter, Annähern des Trennstempels (31) und des wenigstens eines Fügestempels (29, 30) an die Arbeitsfläche (4) zur bereichsweisen Einleitung von Drucckräften auf die zu fügenden und zu trennenden Folienbahnen (2, 3) und Ermittlung wenigstens eines individuellen Kraftverlaufs und/oder eines individuellen Bewegungsverlaufs für den Trennstempel (31) und den wenigstens einen Fügestempel (29, 30) anhand von Kraftsignalen eines jeweils zugeordneten Kraftsensors (45) und/oder anhand von Bewegungssignalen eines jeweils zugeordneten Bewegungssensors (44).

8. Verfahren nach Anspruch 7, **dadurch gekennzeichnet, dass** eine Ansteuerung einer dem Trennstempel (31) zugeordneten Antriebseinrichtung (21) in Abhängigkeit von dem ermittelten individuellen Kraftverlauf und/oder von dem individuellen Bewegungsverlauf für den Trennstempel (31) und/oder einer Ansteuerung einer wenigstens einem Fügestempel (29, 30) zugeordneten Antriebseinrichtung (20, 22) in Abhängigkeit von dem ermittelten individuellen Kraftverlauf und/oder von dem individuellen Bewegungsverlauf für den Fügestempel (29, 30) vorgenommen wird.

## Claims

1. A separation welding device for the sectional joining and sectional separation of weldable film layers (2, 3), with a temperature-controlled working surface (4) that is designed to support joinable and separable film layers (2, 3) and comprises an electrical heating device (11, 12, 13), as well as a counterholder (15) for sectionally applying pressure to the joinable and separable film layers (2, 3), which delimits a variably adjustable working gap (32, 33,34) with the working surface (4) and which comprises two mutually spaced joining stamps (29, 30) and one separating stamp (31) arranged between the joining stamps (29, 30), wherein the separating stamp (31) an at least one joining stamp (29, 30) are moveably attached to the counterholder (15), wherein the separating stamp (31) and/or the joining stamp (29, 30) are each assigned a force sensor (45) and/or a motion sensor (44), in particular a range sensor, to calculate a separation sequence determined by the separating stamp (31) and/or a joining sequence determined by the joining stamp (29, 30), **characterized in that** the separating stamp (31) and the at least one joining stamp (29, 30) are elastically linearly movably coupled to the counterholder (15).

2. The separation welding device according to claim 1 **characterized in that** the motion sensor (45) is arranged as a displacement transducer between the counterholder (15) and the separating stamp (31) and/or the at least one joining stamp (29, 30), or as an acceleration sensor on the separating stamp (31) and/or the at least one joining stamp (29, 30) .

3. The separation welding device according to one of the aforementioned claims, **characterized in that** the separating stamp (31) and each of the joining stamps (29, 30) are each assigned a drive device (20, 21, 22) and a force sensor (44) and/or a motion sensor (45).

4. The separation welding device according to claim 3, **characterized in that** a control device (41) for providing drive energy based on a force signal from the respective force sensor (44) and/or a movement signal from the respective motion sensor (45) is assigned to the drive device (20, 21, 22).

5. The separation welding device according to claim 3 or 4, **characterized in that** the force sensor (44) is connected to the drive device (20, 21, 22) and is designed as a sensor from the group: electrical current sensor, electrical voltage sensor, expansion sensor, fluid pressure sensor.

6. The separation welding device according to one of the aforementioned claims, **characterized in that** the electrical heating device is designed as an impulse welding device.

7. A method for sectional joining and sectional separation of weldable film layers (2, 3) using a separation welding device (1) according to claim 1, comprising the steps: provision of the joinable film layers (2, 3) in a variably adjustable working gap (32, 33, 34) between the temperature-controlled working surface (4) and the counterholder (31) which is provided with the separating stamp (31) and the joining stamps (29, 30), approach of the separating stamp (31) and at least one joining stamp (29, 30) to the working surface (4) for sectionally applying pressure to the joinable and separable film layers (2, 3) and determining at least one individual force profile and/or an individual movement sequence for the separating stamp (31) and the at least one joining stamp based (29, 30) on force signals from a force sensor (45) and/or based on movement signals from a motion sensor (44).

8. The method according to claim 7, **characterized in that** control of a drive device (21) assigned to the separating stamp (31) is performed based on the determined individual force profile and/or of the individual movement progression for the separating stamp (31) and/or control of a drive device (20, 21) assigned to the at least one joining stamp (29, 30) is performed based on the determined individual force profile and/or of the individual movement progression for the joining stamp (29, 30).

## Revendications

1. Dispositif de coupe et de soudage servant à assembler par endroits et à couper par endroits des bandes de film (2, 3) pouvant être soudées avec une surface de travail (4) thermorégulable, qui est réalisée pour supporter des bandes de film (2, 3) à assembler et à couper et qui comprend un dispositif de chauffage (11, 12, 13) électrique, ainsi qu'avec une contre-butée (15) servant à imprimer par endroits des forces de pression sur les bandes de film (2, 3) à assembler et à couper, qui délimite avec la surface de travail (4) une fente de travail (32, 33, 34) à réglage variable et qui comprend deux poinçons d'assemblage (29, 30) disposés à distance l'un de l'autre et un poinçon de coupe (31) disposé entre les poinçons d'assemblage (29, 30), dans lequel le poinçon de coupe (31) et au moins un poinçon d'assemblage (29, 30) sont logés de manière mobile au niveau de la contre-butée (15), dans lequel respectivement un capteur de force (45) et/ou respectivement un capteur de déplacement (44), en particulier un capteur de distance parcourue, servant à déterminer un profil de coupe défini par le poinçon de coupe (31) et/ou un profil d'assemblage défini par le poinçon d'assemblage (29, 30) sont associés au poinçon de coupe (31) et/ou au poinçon d'assemblage (29, 30), **caractérisé en ce que** le poinçon de coupe (31) et l'au moins un poinçon d'assemblage (29, 30) sont couplés de manière mobile linéairement de manière élastique à la contre-butée (15).

2. Dispositif de coupe et de soudage selon la revendication 1, **caractérisé en ce que** le capteur de déplacement (45) est réalisé en tant que système de mesure de distance parcourue entre la contre-butée (15) et le poinçon de coupe (31) et/ou l'au moins un poinçon d'assemblage (29, 30) ou en tant que capteur d'accélération installé au niveau du poinçon de coupe (31) et/ou au niveau d'au moins un poinçon d'assemblage (29, 30).

3. Dispositif de coupe et de soudage selon l'une quelconque des revendications précédentes, **caractérisé en ce que** respectivement un dispositif d'entraînement (20, 21, 22) et respectivement un capteur de force (44) et/ou respectivement un capteur de déplacement (45) sont associés au poinçon de coupe (31) et à chacun des poinçons d'assemblage (29, 30).

4. Dispositif de coupe et de soudage selon la revendication 3, **caractérisé en ce qu'**un dispositif de commande (41) servant à fournir de l'énergie d'entraînement en fonction d'un signal de force du capteur de force (44) respectif et/ou d'un signal de déplacement du capteur de déplacement (45) respectif est associé au dispositif d'entraînement (20, 21, 22).

5. Dispositif de coupe et de soudage selon la revendication 3 ou 4, **caractérisé en ce que** le capteur de force (44) est relié au dispositif d'entraînement (20, 21, 22) et est réalisé en tant que capteur parmi le groupe ; capteur de courant électrique, capteur de tension électrique, capteur de contrainte, capteur de pression de fluide.

6. Dispositif de coupe et de soudage selon l'une quelconque des revendications précédentes, **caractérisé en ce que** le dispositif de chauffage (11, 12, 13) électrique est réalisé en tant que dispositif de soudage par impulsion.

7. Procédé d'assemblage par endroits et de coupe par endroits de bandes de film (2, 3) pouvant être soudées avec un dispositif de coupe et de soudage (1) selon l'une quelconque des revendications précédentes, avec les étapes : de fourniture des bandes de film (2, 3) à assembler dans une fente de travail (32, 33, 34) à réglage variable entre la surface de travail (4) thermorégulable et la contre-butée pourvue du poinçon de coupe (31) et des poinçons d'assemblage (29, 30), de rapprochement du poinçon de coupe (31) et de l'au moins un poinçon d'assemblage (29, 30) à la surface de travail (4) pour imprimer par endroits des forces de pression sur les bandes de film (2, 3) à assembler et à couper et de détermination d'au moins un profil de force individuel et/ou d'un profil de déplacement individuel pour le poinçon de coupe (31) et l'au moins un poinçon d'assemblage (29, 30) à l'aide de signaux de force d'un capteur de force (45) respectivement associé et/ou à l'aide de signaux de déplacement d'un capteur de déplacement (44) respectivement associé.

8. Procédé selon la revendication 7, **caractérisé en ce qu'**un pilotage d'un dispositif d'entraînement (21) associé au poinçon de coupe (31) est réalisé en fonction du profil de force individuel déterminé et/ou du profil de déplacement individuel pour le poinçon de coupe (31) et/ou un pilotage d'un dispositif d'entraînement (20, 22) associé à au moins un poinçon d'assemblage (29, 30) est réalisé en fonction du profil de force individuel déterminé et/ou du profil de déplacement individuel pour le poinçon d'assemblage (29, 30).
